# EUROPEAN PATENT SPECIFICATION

(11) **EP 2 787 009 B1**
(45) Date of publication and mention of the grant of the patent: **28.12.2022**
(21) Application number: 14163253.9
(22) Date of filing: 12.11.2004
(51) Int. Cl.: C08B 30/12, C08B 30/16, C08B 31/00, C08B 30/18, B01J 8/10, B01J 8/24, B01J 19/18, B01J 19/00

(54) **Method for modifying starch or starch derivaties**
Verfahren zur Modifizierung von Stärke oder stärkehaltiger Derivate
Procédé de modification d'amidon ou de dérivés d'amidon

(30) Priority: 13.11.2003 EP 03257164
(43) Date of publication of application: 08.10.2014
(62) Divisional of application: 04797859.8
(73) Proprietor: Cerestar Holding B.V., 4551 LA Sas Van Gent (NL)
(72) Inventor: Berckmans, Marc Charles Florent, 1030 Brussels (BE); Sivasligil, Dogan Sahin, 3990 Overijse (BE)
(74) Representative: Dottridge, Cass A.C.

(56) References cited:
- EP-A- 1 281 721
- EP-A1- 0 710 670
- EP-A2- 0 123 056
- GB-A- 853 828
- NL-A- 9 302 094
- US-A- 3 360 866
- US-A- 4 021 927

## Description

### Technical Field

The present invention relates to a method of modifying starch and starch derivatives in a continuous process. The invention further relates to the use of reactors in such methods.

### Background of the Invention

Starch is the principal carbohydrate component of higher plants and has many industrial applications. In the food industry, for example, starch is used, amongst other things, as a texturing agent, gelling agent, thickener and stabilizer. In paper manufacture, starch is used as a sizing agent, for improving printability, surface strength and solvent-resistance. Starch is also used in the fermentation and textile industries and in the manufacture of adhesives, detergents, cosmetics, pharmaceuticals, emulsifying and dispersing agents, inks and dyes, plastics, coatings and many other commonly used products.

In order to fulfil these roles, however, certain specific properties (such as rheological properties, shear strength, stability, viscosity at different temperatures, gelatinisation, solubility, etc.) may be required. Often, these are not properties associated with native starch. Various methods of starch modification have therefore been developed.

Such methods include hydrothermal treatment, hydrolysis, degradation (dextrinisation, acid-thinning, oxidation), esterification, etherification, stabilistation (e.g. by cross-bonding), etc.

Traditionally, the most successful methods of starch modification on an industrial scale have been based on batch processing in aqueous solutions. Such methods, however, have several innate disadvantages. These include the production of enormous quantities of aqueous effluent, the disposal of which results in a considerable burden on production and running costs, and the fact that these methods have to be carried out discontinuously (in batches) which has an adverse effect both on their control and on overall costs.

Several attempts have been made to develop alternative methods for the modification of starch which would overcome these disadvantages. EP710670A1, for example, describes a continuous chemical modification process according to which a starch powder and a reagent are introduced simultaneously into a reactor. A rotating screw within the reactor rapidly creates a fine, dynamic liquid layer, allowing the starch and reagent to interact. This method, however, suffers from several drawbacks. First, due to the speed at which the starch is passed through the reactor, little time is allowed for any reaction to occur (i.e. insufficient contact time between the starch and the reagent is achieved). In addition, under the centrifugation force created by the rotating screw, starch has a tendency to accumulate on the reactor walls. Should the rotating speed be reduced sufficiently to allow for an acceptable contact time and to address the problem of runability, the starch and reagent could no longer be properly mixed, thereby again having a negative effect on reaction levels and final product quality.

Another example is WO 97/13788 which describes a process for the chemical fluidification of starches carried out under standard plug flow conditions, at temperatures at most equal to 77°C and with reaction times of up to 6 hours. This method also has several disadvantages. First of all, by the very nature of plug flow reactors, very little mixing of materials occurs. As noted above, this will have a negative effect on reaction levels. In addition, with temperatures not exceeding 77°C and because of the static movement of the starch particles through the reactor, they will not be properly dried, even if residence times are increased. Finally, because plug flow reactors in effect mimic batch process conditions, the disadvantages associated with the latter will not be overcome.

A further example is US 4,021,927. This document describes a fluidising reactor wherein particles pass through an agitated zone before entering a number of heated, tubular reactors. Unfortunately, this reactor does not allow for fluidisation to be maintained throughout the reaction meaning that the substrate may be unevenly reacted. In particular, since the agitated and reactor zones are separate, fluidisation will not be maintained during heating. As a result, not all substrate particles will come into contact with the heated wall of the tubular reactors, heavier particles will pass through the heated zones faster than their lighter counterparts (the reactor relies on gravity to transport the substrate from inlet to outlet) and particles may stick to the walls of the reactor thereby affecting runnability. Overall, this leads to an inefficient, non-homogeneous reaction.

There is therefore still a need, in the art, for an improved and more economical method of modifying starch. The present invention provides such a method.

### Summary of the Invention

In a first aspect of the present invention, there is provided a method of modifying starch or starch derivativesas defined in the claims. The method is comprising: introducing a continuous flow of starch substrate, gas and, optionally, one or more reagents, into a reactor, wherein the starch substrate:
- has a moisture content between 0 and 45% by weight, preferably between 1 and 30% by weight;
- has a residence time in the reactor of between 1 and 60 minutes, preferably of between 2 and 45 minutes; and
- is heated to between 50 and 220°C, preferably to between 80 and 220°C,
characterised in that:
- the starch substrate and the gas are introduced into the reactor in opposing directions; and in that
- the reactor has a tubular body comprising a rotating shaft upon which is disposed one or a plurality of blades.

According to one embodiment, the blade or blades will have a tip speed of between 2 and 30 m/s.

The starch substrate may be selected from one or more native starches, starch derivatives, starchy materials such as flour and mixtures of two or more thereof. Preferably, the starch substrate is introduced into the reactor in powder form.

The reagent may be, for example, a chemical or enzymatic reagent selected from a hydrolysing agent, an oxidation agent, an acid, a dextrinisation agent, an alkylation agent, an esterification agent, an etherification agent, a cross-bonding agent and mixtures of two or more thereof. Preferably, the reagent will be selected from a mineral acid such as HCl, H₂SO₄ or H₂PO₄, an organic acid such as citric acid, a peroxide such as hydrogen peroxide (with or without a catalyst such as copper), an oxidising agent such as persulfate and mixtures of two or more thereof.

According to a preferred embodiment, the reagent is added to the starch substrate before being introduced into the reactor.

In a second embodiment of the present invention, there is provided a method of preparing highly soluble starch comprising: introducing a continuous flow of starch substrate, gas and one or more reagents selected from a mineral acid, a peroxide and an oxidising agent, into a reactor, wherein the starch substrate has a moisture content between 1 and 30% by weight, a residence time in the reactor of between 2 and 45 minutes and is maintained at between 80 and 220°C, characterised in that the starch substrate and the gas are introduced into the reactor in opposing directions and in that the reactor has a tubular body comprising a rotating shaft upon which is disposed one or a plurality of blades.

Preferably, the starch produced according to this method will be from 70 to 100% soluble in cold water, preferably from 75 to 100% soluble in cold water.

In a third embodiment of the present invention, there is provided the use of a reactor for the modification of starch or starch derivatives, said reactor having a tubular body comprising:
- a rotating shaft upon which is disposed one or a plurality of blades; and
- at least two inlets, one for the introduction of a starch substrate and, optionally, one or more reagents, and one for the introduction of a gas,
characterised in that the inlets are positioned such that the starch and gas are introduced into the reactor in opposing directions.

### Description of the Figures

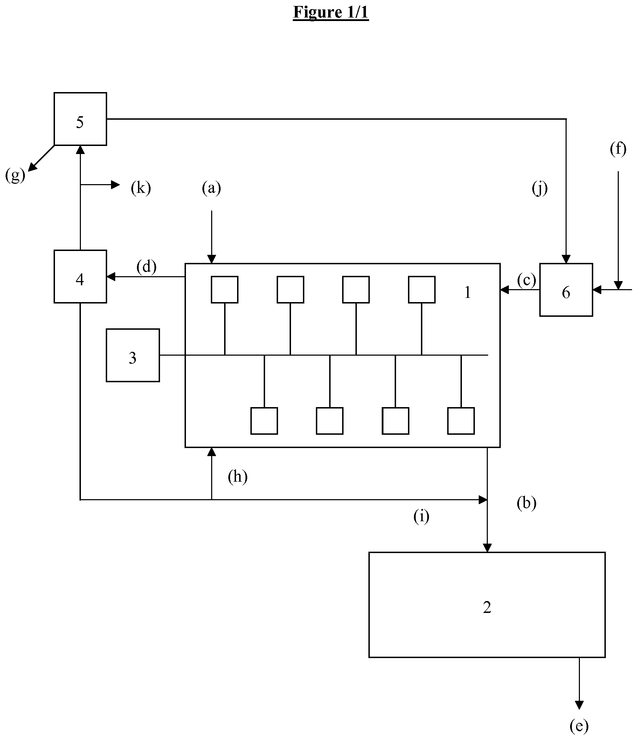

Figure 1 is a schematic representation of a reactor unit according to a possible embodiment of the present invention.

### Detailed Description of the Invention

The present invention provides a method of modifying starch or starch derivatives. The term "starch derivatives" refers to any molecule produced by a modification or series of modifications - physical, chemical and/or genetic - to native starch. Accordingly, starch derivatives include (but are not limited to): enzyme or acid hydro lysed starches (such as maltodextrins, glucose syrups and hydrolysates); degraded starches (e.g. starches degraded by heat, oxidation, catalysts or acidification such as roast dextrin and thin-boiling starch); pre-gelatinised starches; starch esters (such as starch n-octenyl succinate); starch ethers; cross-bonded starches; retrograded starches; bleached starches; cationised or anionised starches; amphoteric starches; starch phosphates; hydroxyalkylated starches and alkali treated starches. For simplicity's sake, any references herein to starch will be understood to include both native starch and starch derivatives.

The term "starch substrate", by contrast, refers to the actual product which is introduced into the reactor in a first step of the present method. The substrate may comprise one or more native starches, one or more starch derivatives or a mixture thereof. Preferably, it will consist of starch and/or starch derivative(s). The starch itself can be of any desired origin (potato, wheat, corn, rice, tapioca, pea, barley, etc.) and can be waxy or not. The substrate may also include (or consist of) other starchy materials suitable for use in a tubular reactor. An example of such materials is flour (e.g. potato flour, soy flour or a grain flour such as wheat flour).

The substrate may be used in combination with one or more natural or synthetic polymers (such as cellulose or a hydrocolloide) and/or one or more organic or inorganic compounds. It may also be mixed with a buffer (such as NaOH).

The substrate may be in powder or cake form and will have a moisture content of between 0 and 45% by weight, preferably between 1 and 30% by weight, even more preferably between 3 and 25% by weight at its point of entry into the reactor. If the substrate has a moisture level higher than 45%, it should be at least partially dried before introduction into the reactor. Moisture levels can be controlled within the reactor if necessary (for example: by adding water or steam with the gas, by controlling reaction temperature and/or by extracting moisture e.g. using an extractor fan). Preferably, moisture levels of 0-15% by weight will be obtained at the reactor outlet.

The reactor, as defined herein, is a reactor having a tubular, preferably cylindrical, body within which is positioned a rotating shaft. The shaft is provided with one or a plurality of blades. By "one or a plurality of blades", it is not intended to limit the reactor to any particular construction. Indeed, the blade or blades may just as well take the form of a number of separate paddles or of a single, helical blade disposed around the shaft in the manner of a screw thread. The blade or blades will preferably have a tip speed between 2 and 30 m/s, more preferably between 3 and 25 m/s, even more preferably between 4 and 20 m/s. In practice, the rotating speed and angle of the blades will be adjusted depending on the desired residence time of the substrate in the reactor.

Residence time will be between 1 and 60 minutes, preferably between 2 and 45 minutes, even more preferably, between 10 and 30 minutes. Of course, the exact residence time will be determined for each reaction, taking into account various variable factors (e.g. nature of substrate, temperature of reactor, quantity and nature of reagent, speed of rotation, etc) and the type and extent of modification to be performed. Thus, for example, whereas for certain reactions, the preferred residence time might be 4 minutes, for others, it might be 30 minutes.

In use, the blade or blades will convey the starch substrate from an inlet at one end of the reactor to an outlet at the other end in a continuous, plug-flow type manner. As will be appreciated by the skilled person, the term "continuous" as used herein is intended to distinguish the present method from a batch-type process.

As it is conveyed from its inlet at one end of the reactor to its outlet at the other, the starch will be heated to a temperature of between 50 and 220°C. In practice, this temperature is measured as the product temperature at the reactor outlet. Preferably, it will be between 80 and 220°C, more preferably between 100 and 180°C, even more preferably between 100 and 160°C.

Other reaction parameters, such as moisture, pH and pressure, may also be controlled. Appropriate means for controlling these parameters will be known to the skilled person. By way of example, however, moisture can be controlled by regulating the amount of liquid introduced into and/or extracted from the reactor. Moisture extraction can be achieved via a simple moisture outlet or, for instance, by using a moisture extractor fan. pH can be controlled with the use of buffers. Buffers can be introduced into the reactor with any one or more of the starch substrate, the reagent or the gas. They can also be introduced separately. According to one embodiment, buffers will be used to ensure that the reaction is carried out under alkaline conditions. Pressure can be controlled, for example, with the use of air-locks at the reactor outlets (e.g. at the product outlet and at the gas and/or moisture outlet) which prevent gas (i.e. air, steam, etc.) release until a certain pressure has been reached.

As mentioned above, the reactor comprises an inlet for the starch substrate. It also comprises a gas inlet positioned such that the starch substrate and gas are introduced into the reactor in opposing directions. Of course, the substrate and gas inlets do not necessarily have to be on geometrically opposing sides of the reactor, provided that they are sufficiently separated and angled such that, in use, the substrate flow and gas flow run counter-current to each other.

The gas inlet may be of any type, allowing, for example, for gas to be pumped into the reactor or for it to be sucked in. Indeed, according to one embodiment, the reaction may be carried out under vacuum. According to this embodiment, the reactor will comprise a gas and/or moisture outlet, positioned substantially opposite the gas inlet and preferably comprising one or more means for increasing gas and/or moisture extraction, such as an extractor fan. Also according to this embodiment, the gas inlet will be no more than e.g. an aperture or a one-way valve. Thus, as gas is extracted at one end of the reactor, it will be sucked in at the other end, thereby creating a counter-current flow of gas and starch substrate through the reactor.

A counter-current flow leads to better mixing of the starch substrate with any eventual reagents and in better control of residence times (because the substrate is prevented from passing too quickly through the reactor). Also, because of the resulting turbulence, each substrate particle will come into contact more often with the heated reactor wall leading to a more homogeneous reaction. What is more, particle temperature will increase more quickly thus accelerating the reaction rate and therefore decreasing reaction time. The counter-current flows also provides an efficient method of transporting reactants through the reactor whilst maintaining the substrate particles in a fluidised state (and therefore preventing them from settling and/or sticking to the reactor wall). This results in increased reaction efficiency and, consequently, reduced costs. In addition, it avoids the usual drawbacks associated with the use of batch reactors and with the continuous reactors of the prior art (e.g. runability).

The gas used to create the counter-current may be any gas but will preferably be air, steam, nitrogen, carbon dioxide, an inert gas, controlled oxygen or a mixture of two or more thereof. It may include reagents such as oxidants (e.g. ozone), amines, neutralising agents or additives capable of modifying or controlling reaction conditions. For example, it may include a buffer such as NH₃ or SO₂. The gas may also be heated before entry into the reactor. Preferably, the gas will have a flow rate through the reactor of 0.2 - 10 m/s, more preferably of 0.2 - 2 m/s, even more preferably of 0.2-1 m/s.

The reactor may comprise one or more additional inlets for the introduction, if desired, or one or more reagents (enzyme, catalyst, etc.). The use of a reagent is not always necessary as the modification may simply consist of a physical modification (e.g. by heating). However, if a reagent is used, it can be selected, for example, from any one or more of: a hydrolysing agent (such as α-amylase, β-amylase, glucoamylase or pullulanase), an oxidation agent (such as sodium hypochlorite or persulfate), an acid such as an acid-thinning agent (e.g. H₂SO₄ or H₃PO₄) or a dextrinisation agent (such as HCl), an alkylation agent, an esterification agent (such as acetic anhydride, vinyl acetate or n-octenyl succinate anhydride), an etherification agent (such as propylene oxide), a cross-bonding agent (such as phosphorous oxychloride, sodium trimetaphosphate or mixed anhydride of acetic and adipic acid) or other reactive compounds such as urea, proteins or phosphate compounds such as polyphosphates. This is of course not an exhaustive list as the selection of a reagent will depend on the type of modification to be achieved. A skilled person will be able to choose which reagent or reagents should be used in view of the type of reaction to be performed.

For example, if it is desired to increase the solubility of starch, the reagent might be a mineral acid (such as H₂SO₄ or H₃PO₄), an organic acid (such as citric acid), a peroxide (such as hydrogen peroxide) and/or an oxidation agent (such as sodium hypochlorite or persulfate). It has indeed been found that, using the method of the present invention, highly soluble starches can be produced in an economical way on an industrial scale. In particular, the method of the present invention can be used to produce starches or starch derivatives which are 70-100%, preferably 75-100% cold water soluble (i.e. soluble in water having a temperature of no more than 50°C).

The reagents, if used, can be added in the form of a solution, powder or gas and in amounts of 0.001-20% by weight (based on total dry weight of starch). Preferably, they will be added in amounts of 0.001-10% by weight and, even more preferably, in amounts of 0.01-3% by weight. Again, the skilled person will be able to determine the appropriate concentration of reagent needed depending, for example, on the quantity of substrate to be modified, the desired level of modification, the nature and concentration of the reagent being used, etc.

As noted above, any eventual reagent or reagents can be introduced into the reactor via one or more separate inlets to that used for the starch substrate. For instance, if the reagent is in the form of a gas, it will preferably be introduced into the reactor via the gas inlet. Alternatively, the reagent and the starch could be introduced via the same inlet. Thus, the reagent and starch may be mixed within the reactor or, in a preferred embodiment, they may be mixed before being introducing into the reactor. Accordingly, the method of the present invention may contain an initial step comprising forming a premix by combining reagent and starch substrate. The premix can then be introduced (as the starch substrate) into the reactor via a single inlet.

If the reagent is to be added to the starch substrate before being introduced into the reactor, the blending step can be carried out in a mixing chamber linked to the reactor. Thus, the reactor so far described may be part of a larger unit ("reactor unit") comprising both upstream and downstream components. Upstream components could include, for instance, the already mentioned mixing chamber or a pre-modification chamber (e.g. if the starch substrate needs to undergo an initial modification before being introduced into the reactor, for example by cooking or by a hydrothermal treatment) while downstream components could include, for instance, a drying chamber, an insulated holding tank (where product temperature could be maintained thereby effectively extending reaction time), a recycling element or one or more further reactors. According to one embodiment, the unit as a whole may include more than one reactor according to the present invention (e.g. if several different modifications are necessary or if a longer residence time is desired). Thus, product issuing from one reactor can be passed (directly or indirectly) to one or more further reactors. When there is more than one reactor according to the present invention, they will preferably be disposed in series.

A possible reactor unit, in accordance with the present invention, is illustrated in Figure 1 in which (1) represents a counter-current reactor, (2) represents a finishing reactor, (3) represents the shaft-rotating motor, (4) represents a dust separator, (5) represents a condensator and (6) represents a heat exchanger. Starch substrate is introduced into the reactor via inlet (a). Gas (with or without reactant and/or water added at (f)) is introduced via inlet (c) and exits the reactor via outlet (d). It may then leave the reactor unit via exhaust (k) or be recycled to the heat exchanger via inlet (j). Modified starch product leaves the reactor via outlet (b). After optional further processing, the product leaves reactor (2) via outlet (e). Condensate is released from the condensator via outlet (g). Alternatively, dust gathered at (4) may be recycled to the reactor at inlets (h) and/or (i).

The present invention also provides for the use of a reactor or reactor unit as described for the modification (hydrolysis, degradation, esterification, etherification, heat moisture treatment, etc.) of starch or starch derivatives.

The invention will now be illustrated by the following, non-limiting examples.

### Example 1 - Method of producing low viscosity, low solubility starch:

150kg corn starch (CIGel 03402 from Cerestar) at 11.5% moisture, 479.7 ml HC1 (from Sigma-Aldrich) at 11.7 N and 15.5 L water were blended in a Lödige mixer for approximately 10 minutes at room temperature. The blend was then introduced, in a continuous flow of 150 kg/h, into a pilot-plant turbo-reactor having multiple blades with a tip speed of 9.3 m/s (and positioned at 2 cm from the reactor wall). A counter current of air heated to 150°C was introduced simultaneously at 0.5 m/s. The substrate was transported through the reactor in a plug-flow type movement and had a residence time in the reactor of approximately 4 minutes. The jacket temperature of the reactor was maintained at approximately 185°C such that the starch product reached a temperature of 117°C (measured at the reactor outlet). Brookfield viscosity and solubility of the product obtained at the outlet of the reactor were measured using the methods described below. The following results were obtained:

| **Brookfield viscosity (30% ds; 40°C)** | **Solubility** |
|---|---|
| 155 mPas | 17% |

As can be seen from these results, the starch product obtained had a significantly lower paste viscosity (despite a relatively high dry substance) than untreated starch and a low solubility.

### Dry substance

Percent dry substance was determined by drying a 5g sample for 4 hours at 120°C under vacuum. Dry substance, % = 100 - [(loss in weight, g x 100) / (Sample weight, g)].

### Solubles

A 2000 g sample was weighed and transferred to a dry 200 ml Kohlrausch flask. The flask was partially filled with water at 25°C and shaken vigorously until the sample was completely in suspension. The suspension was then diluted to volume. The flask was stoppered and shaken gently while submerged in a water bath at 25°C for a total time of 1 hour.

After shaking, the suspension was filtered through a Whatman no. 2V paper. 50.0 ml of the filtrate was measured and transferred to a weighed evaporating dish. The filtrate was then evaporated until dryness in a steam bath and dried in a vacuum oven for 1 hour at 100°C. The residue was cooled in a desiccator and weighed to the nearest gram.

Percent solubles were determined according to the following formula: solubles, % d.b. = (residue weight, g x 100) / [(50 ml / 200 ml) × (sample weight, g) × (d.s., % / 100)].

### Brookfield viscosity

180 g of the sample at 30% d.s. were weighed into a stainless steel 1 1 preparation beaker. Water was added to the beaker until the total weight of the sample reached 600 g. Water and sample were then mixed with a plastic rod until a homogeneous slurry was obtained. A paddle was then introduced into the beaker, the beaker was covered and the paddle was connected to a stirrer over a boiling water bath. Agitation at 250 rpm was started immediately. After exactly 30 min, the beaker was removed from the boiling water bath and the content was very quickly transferred to a 600 ml glass beaker.

The glass beaker was placed in a cooling bath (in which the water is maintained at 15-20°C). The slurry was stirred using a plastic stirring rod together with a thermometer until a temperature of 40°C was reached. Viscosity (in mPas) was then measured in a Brookfield RVT series viscometer equipped with a no. 2 spindle. The measurement was made at 40°C and at 100 rpm.

### Example 2 - Method of producing low viscosity, high solubility starch:

150kg corn starch (CIGel 03402 from Cerestar) at 11.5% moisture, 312.4 ml HC1 (from Sigma-Aldrich) at 11.7 N and 15.6 L water were blended in a Lödige mixer for approximately 10 minutes at room temperature. The blend was then introduced, in a continuous flow of 150 kg/h, into a pilot plant turbo-reactor having multiple blades with a tip speed of 5.0 m/s (and positioned at 2 cm from the reactor wall). A counter current of air heated to 150°C was introduced simultaneously at 0.5 m/s. The substrate was transported through the reactor in a plug-flow type movement and had a residence time in the reactor of approximately 30 minutes. The jacket temperature of the reactor was maintained at approximately 185°C such that the starch product reached a temperature of 125°C (measured at the reactor outlet). Brookfield viscosity and solubility of the product obtained at the outlet of the reactor were measured using the same methods as described above (except that a 270 g sample at 45% d.s. was used for the viscosity measurement). The following results were obtained:

| **Brookfield viscosity (45% ds; 40°C)** | **Solubility** |
|---|---|
| 180 mPas | 90% |

As can be seen from these results, the starch product obtained had a significantly lower paste viscosity (despite a high dry substance) than untreated starch. The product also has a much higher solubility.

## Claims

1. A method of modifying starch or starch derivatives comprising: introducing a continuous flow of starch substrate, gas and, optionally, one or more reagents, into a reactor, wherein the starch substrate has a moisture content of between 0 and 45% by weight, a residence time in the reactor of between 1 and 60 minutes and is heated to a temperature between 50 and 220°C, **characterised in that**:
(1) the starch substrate and the gas are introduced into the reactor in opposing directions;
(2) the reactor has a tubular body comprising a rotating shaft upon which is disposed one or a plurality of blades, said blades conveying the starch from an inlet at one end of the reactor to an outlet at the other end of the reactor in a continuous, plug-flow type manner, wherein the temperature to which the starch is heated is measured as the product temperature at the reactor outlet, and
(3) the reactor is part of a reactor unit comprising upstream and downstream components, wherein the downstream component is selected from a drying chamber, an insulated holding tank, a recycling element, and a further reactor.

2. A method according to claim 1 wherein the blades have a tip speed of between 2 and 30 m/s, preferably between 3 and 25 m/s.

3. A method according to claim 1 or claim 2 wherein the starch substrate has a moisture content of between 1 and 30% by weight.

4. A method according to any one of the preceding claims wherein the starch substrate is selected from a native starch, starch derivative, starchy material and mixtures of two or more thereof.

5. A method according to any one of the preceding claims wherein the starch substrate is introduced into the reactor in powder form.

6. A method according to any one of the preceding claims wherein the reagent is selected from a hydrolysing agent, an oxidation agent, an acid, a dextrinisation agent, an alkylation agent, an esterification agent, an etherification agent, a cross-bonding agent and mixtures of two or more thereof.

7. A method according to any one of the preceding claims wherein the reagent is selected from a mineral acid, a peroxide, an oxidising agent and mixtures of two or more thereof.

8. A method according to any one of the preceding claims wherein the one or more reagents are added in an amount between 0.001 and 20% by weight.

9. A method according to any one of the preceding claims wherein the one or more reagents are introduced into the reactor in liquid, powder or gas form.

10. A method according to any one of the preceding claims wherein at least one of tie one or more reagents is added to the starch substrate before being introduced into the reactor.

11. A method according to any one of the preceding claims wherein the residence time of the starch in the reactor is between 2 and 45 minutes.

12. A method according to any one of the preceding claims wherein the reaction is maintained at a temperature between 80 and 220°C.

13. A method according to any one of the preceding claims wherein the gas introduced into the reactor is selected from: air, steam, nitrogen, carbon dioxide and a mixture of two or more thereof.

14. A method according to any one of the preceding claims, comprising: introducing a continuous flow of starch substrate, gas and, one or more reagents selected from a mineral acid, a peroxide and an oxidizing agent, into the reactor, wherein the starch substrate has a moisture content between 1 and 30% by weight, a residence time in the reactor of between 2 and 45 minutes and is heated to between 80 and 220°C, wherein a highly soluble starch is prepared by the method.

15. A method according to claim 14, wherein the reaction is carried out under alkaline conditions.

16. A method according to claim 14 or claim 15, wherein the highly soluble starch is from 70% to 100% soluble in water having a temperature of no more than 50°C.

17. Use of a reactor for the modification of starch or starch derivatives, said reactor having a tubular body comprising:
- at least two inlets, one for the introduction of a starch substrate and, optionally, one or more reagents, and one for the introduction of a gas, **characterised in that** the inlets are positioned such that the starch and gas are introduced into the reactor in opposing directions; and
- a rotating shaft upon which is disposed one or a plurality of blades, said blades conveying the starch from an inlet at one end of the reactor to an outlet at the other end of the reactor in a continuous, plug-flow type manner, and wherein
- the reactor is part of a reactor unit comprising upstream and downstream components, wherein the downstream component is selected from a drying chamber, an insulated holding tank, a recycling element, and a further reactor.

18. Use according to claim 17 wherein the blade or blades have a tip speed of between 2 and 30 m/s, preferably between 3 and 25 m/s.

19. Use according to claim 17 or claim 18 for the hydrolysis, degradation, oxidation, acid degradation, dextrinisation, bleaching, etherification, esterification, cross-bonding, alkylation or acetylation of starch and/or starch derivatives.

## Patentansprüche

1. Verfahren zum Modifizieren von Stärke oder Stärkederivaten, umfassend: Einführen einer kontinuierlichen Strömung von Stärkesubstrat, Gas und optional eines oder mehrerer Reagenzien in einen Reaktor, wobei das Stärkesubstrat einen Feuchtigkeitsgehalt zwischen 0 und 45 Gew.-%, eine Verweilzeit in dem Reaktor zwischen 1 und 60 Minuten aufweist und auf eine Temperatur zwischen 50 und 220 °C erhitzt wird, **dadurch gekennzeichnet, dass:**
(1) das Stärkesubstrat und das Gas in entgegengesetzte Richtungen in den Reaktor eingeführt werden;
(2) der Reaktor einen rohrförmigen Körper aufweist, umfassend eine rotierende Welle, auf der eine oder eine Vielzahl von Schaufeln angeordnet sind, wobei die Schaufeln die Stärke von einem Einlass an einem Ende des Reaktors zu einem Auslass an dem anderen Ende des Reaktors in einer Art einer kontinuierlichen Pfropfenströmung transportieren, wobei die Temperatur, auf die die Stärke erhitzt wird, als die Produkttemperatur an dem Reaktorauslass gemessen wird, und
(3) der Reaktor Teil einer Reaktoreinheit ist, umfassend stromaufwärtige und stromabwärtige Komponenten, wobei die stromabwärtige Komponente aus einer Trockenkammer, einem isolierten Lagertank, einem Recyclingelement und einem weiteren Reaktor ausgewählt ist.

2. Verfahren nach Anspruch 1, wobei die Schaufeln eine Spitzengeschwindigkeit zwischen 2 und 30 m/s, vorzugsweise zwischen 3 und 25 m/s aufweisen.

3. Verfahren nach Anspruch 1 oder 2, wobei das Stärkesubstrat einen Feuchtigkeitsgehalt zwischen 1 und 30 Gew.-% aufweist.

4. Verfahren nach einem der vorstehenden Ansprüche, wobei das Stärkesubstrat aus einer nativen Stärke, Stärkederivat, stärkehaltigem Material und Mischungen aus zwei oder mehr davon ausgewählt ist.

5. Verfahren nach einem der vorstehenden Ansprüche, wobei das Stärkesubstrat in Pulverform in den Reaktor eingeführt wird.

6. Verfahren nach einem der vorstehenden Ansprüche, wobei das Reagenz aus einem Hydrolysiermittel, einem Oxidationsmittel, einer Säure, einem Dextrinisierungsmittel, einem Alkylierungsmittel, einem Veresterungsmittel, einem Veretherungsmittel, einem Vernetzungsmittel und Mischungen von zwei oder mehr davon ausgewählt ist.

7. Verfahren nach einem der vorstehenden Ansprüche, wobei das Reagenz aus einer Mineralsäure, einem Peroxid, einem Oxidationsmittel und Mischungen aus zwei oder mehr davon ausgewählt ist.

8. Verfahren nach einem der vorstehenden Ansprüche, wobei das eine oder die mehreren Reagenzien in einer Menge zwischen 0,001 und 20 Gew.-% zugegeben werden.

9. Verfahren nach einem der vorstehenden Ansprüche, wobei das eine oder die mehreren Reagenzien in Flüssig-, Pulver- oder Gasform in den Reaktor eingeführt werden.

10. Verfahren nach einem der vorstehenden Ansprüche, wobei mindestens eines des einen oder der mehreren Reagenzien dem Stärkesubstrat zugegeben wird, bevor es in den Reaktor eingeführt wird.

11. Verfahren nach einem der vorstehenden Ansprüche, wobei die Verweilzeit der Stärke in dem Reaktor zwischen 2 und 45 Minuten liegt.

12. Verfahren nach einem der vorstehenden Ansprüche, wobei die Reaktion bei einer Temperatur zwischen 80 und 220 °C gehalten wird.

13. Verfahren nach einem der vorstehenden Ansprüche, wobei das in den Reaktor eingeführte Gas ausgewählt ist aus: Luft, Dampf, Stickstoff, Kohlendioxid und einer Mischung aus zwei oder mehr davon.

14. Verfahren nach einem der vorstehenden Ansprüche, umfassend:
Einführen einer kontinuierlichen Strömung von Stärkesubstrat, Gas und einem oder mehreren Reagenzien, die ausgewählt sind aus einer Mineralsäure, einem Peroxid und einem Oxidationsmittel, in den Reaktor hinein, wobei das Stärkesubstrat einen Feuchtigkeitsgehalt zwischen 1 und 30 Gew.-%, eine Verweilzeit in dem Reaktor zwischen 2 und 45 Minuten aufweist und auf zwischen 80 und 220 °C erhitzt wird, wobei eine hochlösliche Stärke durch das Verfahren hergestellt wird.

15. Verfahren nach Anspruch 14, wobei die Reaktion unter alkalischen Bedingungen durchgeführt wird.

16. Verfahren nach Anspruch 14 oder 15, wobei die hochlösliche Stärke 70 % bis 100 % in Wasser, das eine Temperatur von nicht mehr als 50 °C aufweist, löslich ist.

17. Verwendung eines Reaktors für die Modifikation von Stärke oder Stärkederivaten, wobei der Reaktor einen rohrförmigen Körper aufweist, umfassend:
- mindestens zwei Einlässe, einen für die Einführung eines Stärkesubstrats und optional eines oder mehrerer Reagenzien und einen für die Einführung eines Gases, **dadurch gekennzeichnet, dass** die Einlässe derart positioniert sind, dass die Stärke und das Gas in entgegengesetzte Richtungen in den Reaktor eingeführt werden; und
- eine rotierende Welle, auf der eine oder eine Vielzahl von Schaufeln angeordnet sind, wobei die Schaufeln die Stärke von einem Einlass an einem Ende des Reaktors zu einem Auslass an dem anderen Ende des Reaktors in der Art einer kontinuierlichen Pfropfenströmung transportieren, und wobei
- der Reaktor Teil einer Reaktoreinheit ist, umfassend stromaufwärtige und stromabwärtige Komponenten, wobei die stromabwärtige Komponente aus einer Trockenkammer, einem isolierten Lagertank, einem Recyclingelement und einem weiteren Reaktor ausgewählt ist.

18. Verwendung nach Anspruch 17, wobei die Schaufel oder Schaufeln eine Spitzengeschwindigkeit zwischen 2 und 30 m/s, vorzugsweise zwischen 3 und 25 m/s, aufweisen.

19. Verwendung gemäß Anspruch 17 oder 18 für die Hydrolyse, Degradation, Oxidation, Säuredegradation, Dextrinisierung, Bleichen, Veretherung, Veresterung, Vernetzung, Alkylierung oder Acetylierung von Stärke und/oder Stärkederivaten.

## Revendications

1. Procédé de modification d'amidon ou de dérivés d'amidon comprenant : l'introduction d'un écoulement continu de substrat d'amidon, de gaz et, facultativement, d'un ou plusieurs réactifs, dans un réacteur, dans lequel le substrat d'amidon a une teneur en humidité comprise entre 0 et 45 % en poids, un temps de séjour dans le réacteur compris entre 1 et 60 minutes et est chauffé à une température entre 50 et 220 °C, **caractérisé en ce que** :
(1) le substrat d'amidon et le gaz sont introduits dans le réacteur dans des directions opposées ;
(2) le réacteur a un corps tubulaire comprenant un arbre rotatif sur lequel est disposée une ou une pluralité de pales, lesdites pales acheminant l'amidon à partir d'une entrée au niveau d'une extrémité du réacteur jusqu'à une sortie au niveau de l'autre extrémité du réacteur d'une manière continue, de type écoulement piston, dans lequel la température à laquelle l'amidon est chauffé est mesurée en tant que température de produit au niveau de la sortie de réacteur, et
(3) le réacteur fait partie d'une unité de réacteur comprenant des composants en amont et en aval, dans lequel le composant en aval est choisi parmi une chambre de séchage, un réservoir de stockage isolé, un élément de recyclage, et un autre réacteur.

2. Procédé selon la revendication 1 dans lequel les pales ont une vitesse périphérique comprise entre 2 et 30 m/s, de préférence entre 3 et 25 m/s.

3. Procédé selon la revendication 1 ou la revendication 2 dans lequel le substrat d'amidon a une teneur en humidité comprise entre 1 et 30 % en poids.

4. Procédé selon l'une quelconque des revendications précédentes dans lequel le substrat d'amidon est choisi parmi un amidon natif, un dérivé d'amidon, un matériau à base d'amidon et des mélanges de deux de ceux-ci ou plus.

5. Procédé selon l'une quelconque des revendications précédentes dans lequel le substrat d'amidon est introduit dans le réacteur sous forme de poudre.

6. Procédé selon l'une quelconque des revendications précédentes dans lequel le réactif est choisi parmi un agent hydrolysant, un agent d'oxydation, un acide, un agent de dextrinisation, un agent d'alkylation, un agent d'estérification, un agent d'éthérification, un agent de réticulation et des mélanges de deux de ceux-ci ou plus.

7. Procédé selon l'une quelconque des revendications précédentes dans lequel le réactif est choisi parmi un acide minéral, un peroxyde, un agent oxydant et des mélanges de deux de ceux-ci ou plus.

8. Procédé selon l'une quelconque des revendications précédentes dans lequel le ou les réactifs sont ajoutés en une quantité comprise entre 0,001 et 20 % en poids.

9. Procédé selon l'une quelconque des revendications précédentes dans lequel le ou les réactifs sont introduits dans le réacteur sous forme de liquide, de poudre ou de gaz.

10. Procédé selon l'une quelconque des revendications précédentes dans lequel au moins un parmi le ou les réactifs est ajouté au substrat d'amidon avant d'être introduit dans le réacteur.

11. Procédé selon l'une quelconque des revendications précédentes dans lequel le temps de séjour de l'amidon dans le réacteur est compris entre 2 et 45 minutes.

12. Procédé selon l'une quelconque des revendications précédentes dans lequel la réaction est maintenue à une température comprise entre 80 et 220 °C.

13. Procédé selon l'une quelconque des revendications précédentes dans lequel le gaz introduit dans le réacteur est choisi parmi : air, vapeur, azote, dioxyde de carbone et un mélange de deux de ceux-ci ou plus.

14. Procédé selon l'une quelconque des revendications précédentes, comprenant : l'introduction d'un écoulement continu de substrat d'amidon, de gaz et, d'un ou plusieurs réactifs choisis parmi un acide minéral, un peroxyde et un agent oxydant, dans le réacteur, dans lequel le substrat d'amidon a une teneur en humidité entre 1 et 30 % en poids, un temps de séjour dans le réacteur compris entre 2 et 45 minutes et est chauffé entre 80 et 220 °C, dans lequel un amidon hautement soluble est préparé par le procédé.

15. Procédé selon la revendication 14, dans lequel la réaction est effectuée dans des conditions alcalines.

16. Procédé selon la revendication 14 ou la revendication 15, dans lequel l'amidon hautement soluble est soluble à raison de 70 % à 100 % dans de l'eau ayant une température n'excédant pas 50 °C.

17. Utilisation d'un réacteur pour la modification d'amidon ou de dérivés d'amidon, ledit réacteur ayant un corps tubulaire comprenant :
- au moins deux entrées, une pour l'introduction d'un substrat d'amidon et, facultativement, d'un ou plusieurs réactifs, et une pour l'introduction d'un gaz, **caractérisée en ce que** les entrées sont positionnées de sorte que l'amidon et le gaz sont introduits dans le réacteur dans des directions opposées ; et
- un arbre rotatif sur lequel est disposée une ou une pluralité de pales, lesdites pales acheminant l'amidon à partir d'une entrée au niveau d'une extrémité du réacteur jusqu'à une sortie au niveau de l'autre extrémité du réacteur d'une manière continue, de type écoulement piston, et dans laquelle
- le réacteur fait partie d'une unité de réacteur comprenant des composants en amont et en aval, dans laquelle le composant en aval est choisi parmi une chambre de séchage, un réservoir de stockage isolé, un élément de recyclage, et un autre réacteur.

18. Utilisation selon la revendication 17 dans laquelle la pale ou les pales ont une vitesse périphérique comprise entre 2 et 30 m/s, de préférence entre 3 et 25 m/s.

19. Utilisation selon la revendication 17 ou la revendication 18 pour l'hydrolyse, la dégradation, l'oxydation, la dégradation par un acide, la dextrinisation, le blanchiment, l'éthérification, l'estérification, la réticulation, l'alkylation ou l'acétylation d'amidon et/ou de dérivés d'amidon.
